# FASCICULE DE BREVET EUROPEEN

(11) **EP 0 694 453 B1**
(45) Date de publication et mention de la délivrance du brevet: **30.09.1998**
(21) Numéro de dépôt: 95111403.2
(22) Date de dépôt: 20.07.1995
(51) Int. Cl.: B60S 1/04

(54) **Dispositif modulaire pour le lavage et l'essuyage d'un pare-brise de véhicule**
Modulare Einrichtung zum Waschen und Wischen einer Fahrzeugscheibe
Modular device for washing and wiping a vehicle windscreen

(30) Priorité: 26.07.1994 FR 9409335
(43) Date de publication de la demande: 31.01.1996
(73) Titulaire: VALEO SYSTEMES D'ESSUYAGE, 78321 La Verrière (FR)
(72) Inventeur: Berge, Gilles, F-78120 Rambouillet (FR); Roumegoux, Jean-Louis, F-75116 Paris (FR); Eustache, Jean-Pierre, F-92160 Antony (FR)
(74) Mandataire: Gamonal, Didier

(56) Documents cités:
- EP-A- 0 588 708
- DE-A- 3 704 325
- DE-A- 4 040 731
- DE-A- 4 114 260
- FR-A- 2 668 110
- FR-A- 2 684 950

## Description

La présente invention concerne un dispositif pour le lavage et l'essuyage d'un pare-brise de véhicule, notamment de véhicule automobile, comportant un capot situé en retrait du bord inférieur du pare-brise.

L'espace situé entre le capot et le bord inférieur du pare-brise sert habituellement au montage de moyens d'essuyage du pare-brise, ainsi qu'une admission d'air depuis l'extérieur vers l'intérieur du véhicule, munie en entrée d'une grille d'entrée d'air. Le véhicule comporte également des moyens pour le lavage du pare-brise, constitué d'un réservoir de liquide lave-glace et de moyens pour réaliser l'aspersion du pare-brise avec ce liquide.

Le réservoir de liquide lave-glace est habituellement disposé sous le capot, dans le compartiment avant du véhicule. Le montage sur les véhicules des moyens d'essuyage, de l'admission d'air, de la grille d'entrée d'air, du réservoir et des moyens pour réaliser l'aspersion du pare-brise sont des opérations qui requièrent un temps de main-d'oeuvre important car les opérations d'assemblage et de montage sont difficilement automatisable et elles sont donc particulièrement coûteuses.

On a proposé d'intégrer dans des dispositifs d'essuyage et de lavage monoblocs la grille d'entrée d'air, l'admission d'air, le réservoir de liquide lave-glace, les moyens d'essuyage et les moyens pour réaliser l'aspersion du pare-brise, de façon à simplifier l'opération de montage dans le véhicule et la rendre automatisable.

Il a été également déjà été proposé un dispositif modulaire pour l'essuyage et le lavage pour le pare-brise d'un véhicule qui évite de faire appel à des dispositifs d'essuyage et de lavage monoblocs qui soient spécifiques à un véhicule donné et qui comporte, à cet effet, au moins un module commun utilisable sur différents types de véhicules, permettant ainsi de réduire les coûts de fabrication en bénéficiant d'économie d'échelle.

Plus particulièrement le dispositif modulaire est constitué d'au moins deux modules à assembler entre eux et au reste du véhicule, l'un des deux modules étant apte à contenir un liquide lave-glace en formant réservoir et l'autre module supportant des moyens d'essuyage du pare-brise.

La présente invention a pour but de proposer un perfectionnement à une telle conception d'un dispositif modulaire permettant d'en améliorer la modularité et d'amplifier les avantages résultant de sa facilité d'assemblage et de montage.

A cet effet, l'invention propose un dispositif modulaire ou le lavage et l'essuyage d'un pare-brise, du type mentionné précédemment et divulgué dans EP-A-0 588 708, caractérisé en ce que l'un module comporte au moins un autre réservoir de liquide réalisé de manière amovible.

Selon divers modes de réalisation de l'invention revendiquée :
- l'autre réservoir contient un autre liquide lave-glace ;
- l'autre réservoir contient du liquide de refroidissement du moteur ;
- l'autre réservoir est un vase d'expansion du liquide de refroidissement du moteur ;
- l'autre réservoir contient du liquide pour l'alimentation d'un circuit de commande hydraulique ;
- le circuit commande le système de freinage du véhicule ;
- le réservoir est un accumulateur de fluide sous pression

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective illustrant un véhicule équipé d'un dispositif modulaire selon l'état de la technique ;
- la figure 2 est une vue de détail en perspective à la plus grande échelle illustrant un mode de réalisation du dispositif modulaire selon l'invention ;
- les figures 3 et 4 sont des vues en section transversale partielle de la figure 2 illustrant des moyens de raccordement des différents compartiments ou chambres des réservoirs supplémentaires ;
- les figures 5 à 8 sont des vues similaires à celle de la figure 2 illustrant encore d'autres variantes du dispositif modulaire.

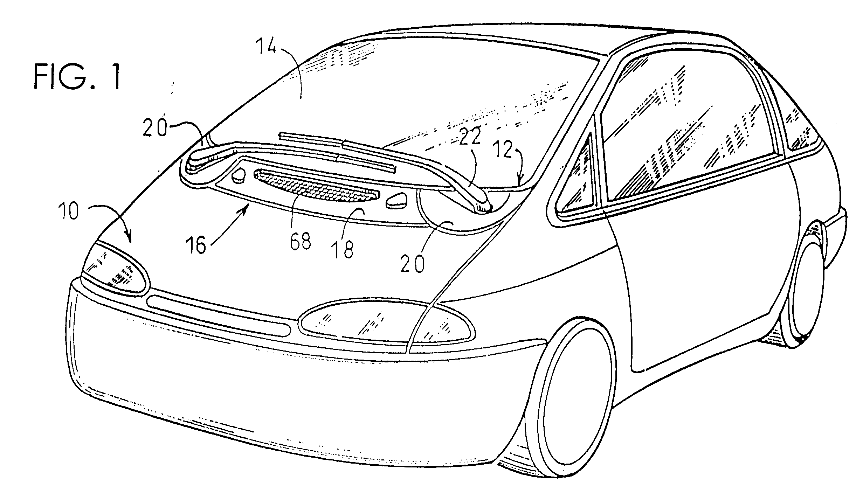

On a représenté sur la figure 1, de façon schématique et en perspective, un véhicule automobile comportant un capot 10 situé en retrait du bord inférieur 12 du pare-brise 14, équipé d'un dispositif modulaire 16 pour le lavage et l'essuyage du pare-brise 14 selon l'état de la technique.

Selon l'exemple de réalisation représenté, le dispositif modulaire 16 est constitué d'un module formant réservoir 18 et de deux modules d'essuyage 20.

Le module formant réservoir présente une face supérieure apparente généralement plane et située dans le prolongement de la surface externe du capot 10, s'étendant longitudinalement sur une partie de la largeur du véhicule de part et d'autre d'un plan de symétrie longitudinale pour la carrosserie du véhicule et latéralement entre le capot 10 et le bord inférieur 12 du pare-brise 14.

Les modules d'essuyage 20 présentent également une face supérieure apparente s'étendant généralement dans le prolongement de la surface externe du capot 10 et sont disposés de part et d'autre du module formant réservoir 18, qu'ils prolongent jusqu'aux côtés du véhicule en couvrant l'espace compris entre le capot 10 et le bord inférieur 12 du pare-brise 14.

Chaque module d'essuyage 20 porte un bras d'essuie-glace 22, connu en lui-même, muni à une extrémité de moyens de fixation sur un arbre d'entraînement couplé à des moyens d'entraînement en rotation de l'arbre et muni à l'autre extrémité d'un balai portant une raclette d'essuyage du pare-brise 14.

Dans le mode de réalisation illustrée sur la figure 1, le module 18 formant réservoir est l'un des compartiment appartenant à un module de plus grande dimension 32 qui délimite trois chambres du réservoir adjacentes 32A, 32B, et 32C dont chacune comporte un bouchon de remplissage 34A, 34B, et 34C.

Chacun des compartiments 32A, 32B, 32C est autonome et peut contenir par exemple soit un liquide de lave-glace de nature différente, soit un liquide de rinçage.

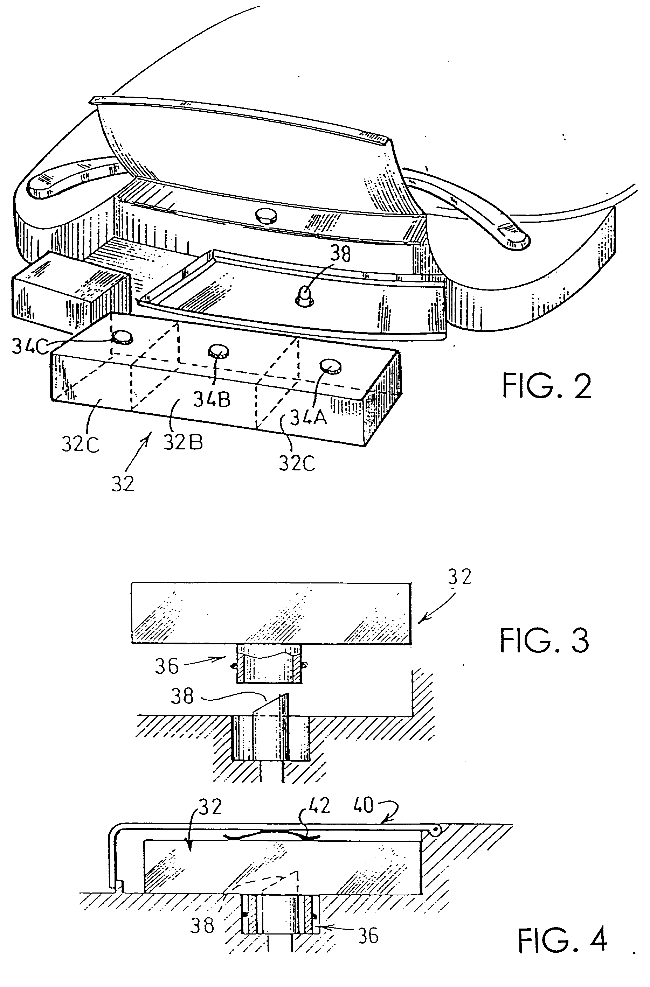

Le réservoir compartimenté 32 peut être réalisé de manière amovible comme cela est schématisé sur la figure 2 et chacun des compartiments peut comporter à sa partie inférieure des moyens de raccordement étanches 36 schématisés aux figures 3 et 4 à raccordement automatique par perçage du fond de chaque compartiment par une extrémité en biseau 38 d'un conduit de raccordement disposé dans le fond du dispositif modulaire et dont un seul est représenté sur la figure 2.

Le maintien en position du réservoir 32, que celui-ci soit compartimenté ou constitué par la juxtaposition de plusieurs petits réservoirs, peut être assuré au moyen d'une trappe articulée de fermeture 40 illustré sur la variante représenté à la figure 4 qui complète la face supérieure du dispositif modulaire et qui agit, au moyen de lames à ressort 42 pour maintenir le ou les réservoirs supplémentaires 32 en place.

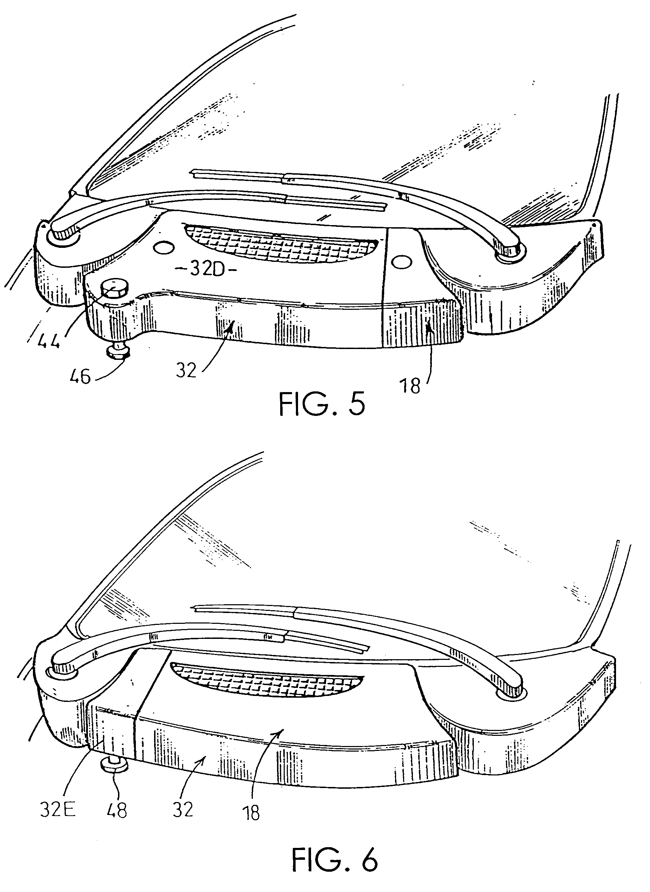

Dans la variante de réalisation illustrée sur la figure 5, le grand réservoir 32 est également un réservoir compartimenté comportant le réservoir de liquide lave-glace constituant le module formant réservoir 18 et qui est complété par un compartiment de plus grandes dimensions 32D qui est un réservoir pour le liquide de refroidissement du moteur du véhicule.

Le compartiment 32D formant réservoir de liquide de refroidissement comporte un bouchon supérieur 44 de remplissage qui est masqué par le capot lorsque ce dernier est fermé ainsi qu'un dispositif 46, agencé dans sa face inférieure pour le raccordement au circuit de refroidissement.

Dans le mode de réalisation illustré à la figure 6, le grand réservoir 32 comporte, outre le module formant réservoir 18, un compartiment 32E qui constitue un vase d'expansion pour le circuit de refroidissement du véhicule (non représenté) comportant des moyens 48 pour son raccordement à ce circuit.

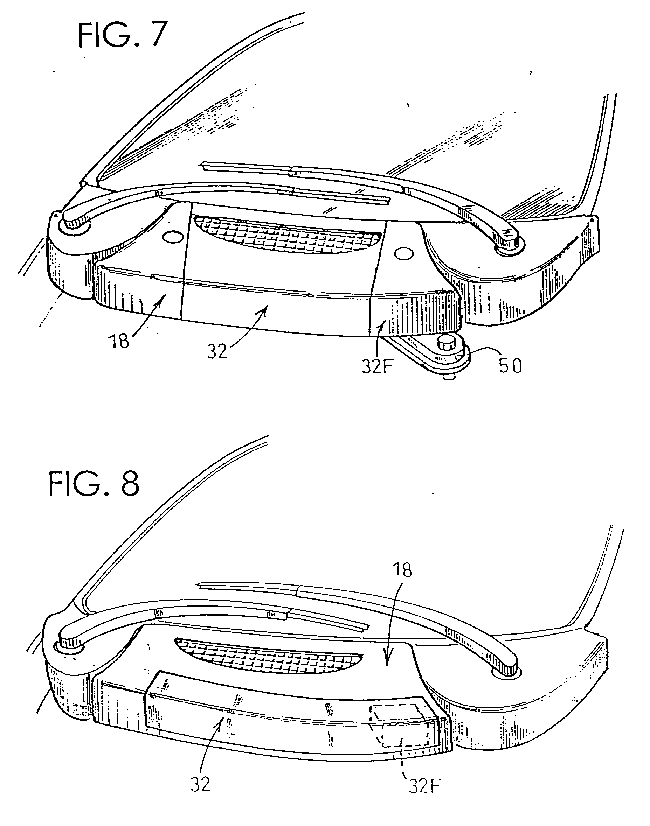

Dans le mode de réalisation illustré sur la figure 7, le grand réservoir 32 comporte au moins un compartiment 32F formant réservoir de liquide de freinage pour l'alimentation, par exemple du circuit d'actionnement hydraulique des freins du véhicule.

Dans la variante de réalisation illustrée sur la figure 8, le grand réservoir ou réservoir complémentaire 32 est réalisé sous la forme d'un élément amovible pouvant par exemple contenir un compartiment 32F de plus petites dimensions pour le liquide de freinage ou pour un accumulateur de fluide sous pression.

## Revendications

1. Dispositif modulaire pour le lavage et l'essuyage d'un pare-brise de véhicule comportant un capot (10) situé en retrait du bord inférieur (14) du pare-brise (12), du type constitué par au moins deux modules (18, 20) à assembler entre eux et au reste du véhicule, l'un des modules (18) étant apte à contenir un liquide lave-glace en formant réservoir et l'autre module (20) supportant des moyens d'essuyage du pare-brise, caractérisé en ce que l'un des modules comporte au moins un autre réservoir de liquide (32, 32A, 32F) réalisé de manière amovible.

2. Dispositif selon la revendication 1, caractérisé en ce que l'autre réservoir (32) contient un autre liquide lave-glace.

3. Dispositif selon la revendication 1, caractérisé en ce que l'autre réservoir (32) contient du liquide de refroidissement du moteur.

4. Dispositif selon la revendication 1, caractérisé en ce que l'autre réservoir (32) est un vase d'expansion du liquide de refroidissement du moteur.

5. Dispositif selon la revendication 1, caractérisé en ce que l'autre réservoir (32) contient du liquide pour l'alimentation d'un circuit de commande hydraulique.

6. Dispositif selon la revendication 5, caractérisé en ce que le circuit commande le système de freinage du véhicule.

7. Dispositif selon la revendication 1, caractérisé en ce que l'autre réservoir (32) est un accumulateur de fluide sous pression.

8. Dispositif selon l'une quelconque des revendications précédentes, caractérisé en ce que l'autre réservoir (32) est compartimenté en plusieurs chambres (32A-32E) susceptibles de contenir différents liquides.

9. Dispositif selon l'une des revendications 1 à 8, caractérisé en ce que l'autre réservoir (32) comporte des moyens de raccordement (36) avec au moins un conduit de raccordement (38) prévu sur ledit dispositif modulaire.

## Claims

1. Modular apparatus for washing and wiping a windscreen of a vehicle having a bonnet (10) extending away from the lower edge (12) of the windscreen (14), of the type comprising at least two modules (18, 20) to be assembled together and to the rest of the vehicle, one of the modules (18) being adapted to contain a screen washing liquid and constituting a reservoir, while the other module (20) supports means for wiping the windscreen, characterised in that one of the modules includes at least one further liquid reservoir (32, 32A, 32F) which is removable.

2. Apparatus according to Claim 1, characterised in that the further reservoir (32) contains another screen washing liquid.

3. Apparatus according to Claim 1, characterised in that the further reservoir (32) contains liquid for cooling the engine.

4. Apparatus according to Claim 1, characterised in that the further reservoir is an expansion vessel for the engine coolant liquid.

5. Apparatus according to Claim 1, characterised in that the further reservoir (32) contains liquid for supply to a hydraulic control circuit.

6. Apparatus according to Claim 5, characterised in that the circuit controls the braking system of the vehicle.

7. Apparatus according to Claim 1, characterised in that the further reservoir (32) is an accumulator for pressurised fluid.

8. Apparatus according to any one of the preceding Claims, characterised in that the further reservoir (32) is compartmented in a plurality of chambers (32A - 32E) arranged to contain different liquids.

9. Apparatus according to one of Claims 1 to 8, characterised in that the further reservoir (32) includes means (36) for connection with at least one connecting circuit (38) arranged on the said modular apparatus.

## Patentansprüche

1. Modulare Einrichtung zum Waschen und Wischen der Windschutzscheibe eines Fahrzeugs, insbesondere eines Kraftfahrzeugs, das eine Fronthaube umfaßt, die von der Unterkante (14) der Windschutzscheibe (12) zurückversetzt angeordnet ist, bestehend aus mindestens zwei Modulen (18, 20), die miteinander und mit dem Rest des Fahrzeugs zu verbinden sind, wobei eines der beiden Module (18) eine Scheibenwaschflüssigkeit enthalten kann, indem es einen Behälter bildet, während das andere Modul (20) Wischmittel zum Wischen der Windschutzscheibe trägt, **dadurch gekennzeichnet**, daß eines der Module mindestens einen anderen abnehmbar ausgeführten Flüssigkeitsbehälter (32, 32A, 32F) umfaßt.

2. Einrichtung nach Anspruch 1, **dadurch gekennzeichnet,** daß der andere Behälter (32) eine andere Scheibenwaschflüssigkeit enthält.

3. Einrichtung nach Anspruch 1, **dadurch gekennzeichnet,** daß der andere Behälter (32) Motorkühlflüssigkeit enthält.

4. Einrichtung nach Anspruch 1, **dadurch gekennzeichnet,** daß der andere Behälter (32) ein Ausdehnungsgefäß für die Motorkühlflüssigkeit ist.

5. Einrichtung nach Anspruch 1, **dadurch gekennzeichnet,** daß der andere Behälter (32) Flüssigkeit für die Speisung eines hydraulischen Betätigungskreislaufs enthält.

6. Einrichtung nach Anspruch 5, **dadurch gekennzeichnet,** daß der Kreislauf das Bremssystem des Fahrzeugs betätigt.

7. Einrichtung nach Anspruch 1, **dadurch gekennzeichnet,** daß der Behälter (32) ein Speicher für ein unter Druck stehendes Medium ist.

8. Einrichtung nach einem der vorangehenden Ansprüche, **dadurch gekennzeichnet,** daß der andere Behälter (32) in mehrere Kammern (32A-32E) unterteilt ist, die verschiedene Flüssigkeiten enthalten können.

9. Einrichtung nach einem der Ansprüche 1 bis 8, **dadurch gekennzeichnet,** daß der andere Behälter (32) Anschlußmittel (36) für den Anschluß an mindestens einen Anschlußkanal (38) umfaßt, der an der besagten modularen Einrichtung vorgesehen ist.
